# EUROPÄISCHE PATENTANMELDUNG

(11) **EP 1 058 202 A2**
(43) Veröffentlichungstag der Anmeldung: **06.12.2000**
(21) Anmeldenummer: 00110870.3
(22) Anmeldetag: 23.05.2000
(51) Int. Cl.: G06K 7/00

(54) **Doppel-SIM-Kartenleser**

(30) Priorität: 01.06.1999 DE 19925076
(71) Anmelder: ddm hopt + schuler GmbH & Co. KG., D-78628 Rottweil (DE)
(72) Erfinder: Hopt, Rudolf, 78628 Rottweil (DE); Hopt, Jürgen, 78628 Rottweil (DE); Storz, Michael, 78467 Konstanz (DE)
(74) Vertreter: KOHLER SCHMID + PARTNER

(57) **Zusammenfassung**

Bei einem Kartenleser (1) für IC-Karten (2a, 2b), insbesondere für SIM-Karten, zur Befestigung auf einer Leiterplatte (10), umfassend mindestens zwei Kontaktiereinheiten (3a, 3b) mit jeweils einem Kartenschacht (4a, 4b), in dessen Schachtöffnung (5a, 5b) jeweils eine IC-Karte (2a, 2b) bis in ihre Kontaktierposition einschiebbar ist, wobei die beiden Kartenschächte (4a, 4b) parallel nebeneinander angeordnet sind, sind die beiden Schachtöffnungen (5a, 5b) benachbarter Kartenschächte (4a, 4b) an unterschiedlichen Seiten des Kartenlesers (1) vorgesehen. Bei diesem Kartenleser ist die Zugänglichkeit zur Entnahme von eingeschobenen IC-Karten verbessert.

## Beschreibung

Die Erfindung betrifft einen Kartenleser für IC-Karten, insbesondere für SIM-Karten, zur Befestigung auf einer Leiterplatte, umfassend mindestens zwei Kontaktiereinheiten mit jeweils einem Kartenschacht, in dessen Schachtöffnung jeweils eine IC-Karte bis in ihre Kontaktierposition einschiebbar ist, wobei die beiden Kartenschächte parallel nebeneinander angeordnet sind, sowie entsprechende Anordnungen von solchen Kartenlesern auf der Leiterplatte.

Ein derartiger Kartenleser ist beispielsweise durch die US 5,184,282 bekanntgeworden.

Sogenannte Chip- oder IC-Karten weisen einen integrierten Schaltkreis (Chip) auf, der mit entsprechenden Kontaktflächen auf der Kartenoberfläche verbunden ist. Eine solche IC-Karte wird in das flache Gehäuse einer Kontaktiereinheit eingeschoben, bis ihre Kontaktflächen kontaktiert werden können. Mit Hilfe von Lese- und/oder Schreibeinrichtungen können die im Chip gespeicherten Daten abgerufen oder geändert werden. Insbesondere im Bereich der Nachrichtenübertragung werden sogenannte SIM-Karten (Subscriber Identification Module) mit Speicherkapazität als Teilnehmer-Identifizierungskarte verwendet, die z.B. für den Betrieb einer Mobilstation eines Telekommunikationsnetzwerkes erforderlich sind.

In den Fign. 4 und 5 der US 5,184,282 ist ein Kartenleser mit mehreren aneinander gestapelten Kartenschächten gezeigt, in die jeweils eine IC-Karte bis in ihre Kontaktierposition eingeschoben werden kann. Die Kartenschächte sind nebeneinander hochkant stehend auf einem Gehäuse angeordnet, wobei sich die Schachtöffnungen aller Kartenschächte zur gleichen Seite, nämlich nach oben, öffnen.

Bei diesem bekannten Kartenleser sind allerdings benachbarte Kartenschächte so nah nebeneinander angeordnet, daß es ohne Hilfsmittel kaum möglich ist, bei drei unmittelbar benachbarten IC-Karten die mittlere IC-Karte aus ihrem Kartenschacht zu entfernen. Weiterhin sind hochkant stehende Kartenschächte bei solchen Anwendungen unerwünscht, bei denen aus Platzgründen eine geringe Höhe des Kartenlesers angestrebt wird.

Es ist daher die Aufgabe der Erfindung, bei einem Kartenleser für IC-Karten der eingangs genannten Art die Zugänglichkeit zur Entnahme von eingeschobenen IC-Karten zu verbessern.

Diese Aufgabe wird erfindungsgemäß dadurch gelöst, daß die beiden Schachtöffnungen benachbarter Kartenschächte an unterschiedlichen Seiten des Kartenlesers vorgesehen sind.

Der mit der Erfindung erzielte Vorteil besteht darin, daß benachbarte IC-Karten auf unterschiedlichen Seiten des Kartenlesers entnommen werden. Zwei auf der gleichen Seite des Kartenlesers angeordnete Kartenschächte sind durch mindestens einen dazwischen liegenden Kartenschacht, der sich zu einer anderen Seite öffnet, voneinander getrennt. Erfindungsgemäß ist der Abstand zwischen zwei Kartenschächten auf der gleichen Seite mindestens doppelt so groß wie bei dem bekannten Kartenleser der US 5,184,282.

Bei besonders bevorzugten Ausführungsformen der Erfindung sind die beiden Kontaktiereinheiten identisch ausgebildet.

Die beiden Schachtöffnungen können auf einander gegenüberliegenden Seiten des Kartenlesers vorgesehen sein. Bevorzugt sind sie jedoch am Kartenleser um 90° zueinander versetzt angeordnet. Wenn z.B. bei einem viereckigen Kartenleser die einzelnen Schachtöffnung ringsum auf jeweils unterschiedlichen Seiten angeordnet sind, sind jeweils drei weitere Kartenschächte auf anderen Seiten vorgesehen, bis sich erneut ein Kartenschacht zur gleichen Seite hin öffnet. Bei einem n-seitigen Kartenleser ist es von Vorteil, wenn die Schachtöffnungen der einzelnen Kontaktiereinheiten um jeweils 360°/n zueinander versetzt ringsum am Kartenleser angeordnet sind.

Die Erfindung betrifft auch die Anordnung von vier vierseitigen Kartenlesern, bei denen jeweils die beiden Schachtöffnungen an jedem Kartenleser um 90° zueinander versetzt angeordnet sind, auf einer Leiterplatte, wobei erfindungsgemäß die vier Kartenleser flach liegend auf der Leiterplatte im Quadrat angeordnet sind und die beiden Schachtöffnungen jedes Kartenlesers jeweils nach außen gerichtet sind, d.h. an den Außenseiten der Anordnung vorgesehen sind.

Diese erfindungsgemäße Anordnung von vier Kartenlesern ermöglicht bei einer vorgegeben Höhe von zwei Kartenschächten die Kontaktierung von acht IC-Karten.

Eine andere vorteilhafte Anordnung ist bei nur zwei vierseitigen Kartenlesern mit jeweils drei Kontaktiereinheiten auf einer Leiterplatte dann gegeben, wenn die zwei Kartenleser flach liegend auf der Leiterplatte angeordnet sind und die drei Schachtöffnungen jedes Kartenlesers an den Außenseiten der Anordnung vorgesehen sind. Bei dieser Anordnung lassen sich bei einer vorgegebenen Höhe von drei Kartenschächten sechs IC-Karten kontaktieren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein Ausführungsbeispiel eines erfindungsgemäßen Kartenlesers;
- Fig. 2: eine Seitenansicht des Kartenlesers entsprechend II in Fig.1;
- Fig. 3: eine Seitenansicht des Kartenlesers entsprechend III in Fig.1; und
- Fig. 4: eine Anordnung von vier der in Fig. 1 gezeigten Kartenlesern auf einer Leiterplatte.

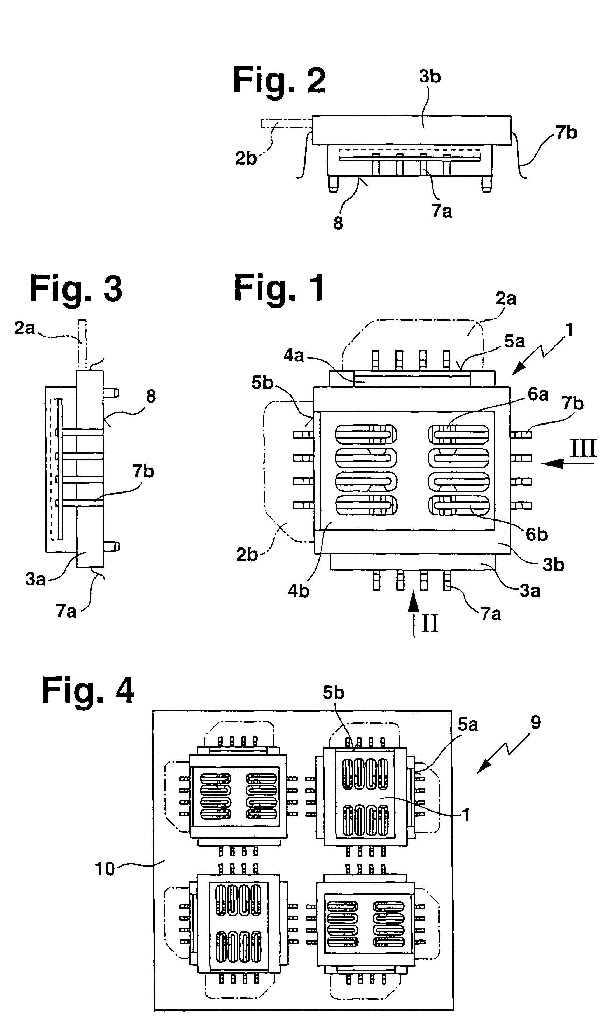

Der in den Fign. 1 bis 3 gezeigte vierseitige Kartenleser **1** dient dem Kontaktieren zweier IC-Karten **2a, 2b**, die im Ausführungsbeispiel als SIM-Karten dargestellt sind. Der Kartenleser 1 weist für jede der beiden IC-Karten jeweils eine Kontaktiereinheit **3a**, **3b** mit jeweils einem Kartenschacht **4a** bzw. **4b** auf, in dessen seitliche Schachtöffnung **5a**, **5b** die IC-Karten 2a, 2b jeweils bis in ihre Kontaktierposition eingeschoben sind. In den Kontaktpositionen kontaktieren jeweils Kontaktfedern **6a**, **6b** der beiden Kontaktiereinheit 3a, 3b die Kontaktflächen der IC-Karten 2a, 2b. Über Anschlußkontakte **7a**, **7b** an der Außenseite des Kartenlesers 1 werden die Kontaktfedern 6a, 6b elektrisch angesteuert.

Bezogen auf die Unterseite **8** des Kartenlesers 1 sind die beiden Kontaktiereinheiten 3a, 3b übereinander angeordnet, wobei ihre Kartenschächte 4a, 4b parallel sowohl zueinander als auch zur Unterseite 8 verlaufen. Die identisch ausgebildeten Kontaktiereinheiten 3a und 3b sind um 90° versetzt zueinander angeordnet, so daß ihre beiden Schachtöffnungen 5a, 5b an unterschiedlichen Seiten des Kartenlesers 1 vorgesehen sind.

Fig. 4 zeigt eine Anordnung **9** von vier Kartenlesern 1 auf einer Leiterplatte **10**. Die Kartenleser sind flach liegend auf der Leiterplatte 10 im Quadrat angeordnet, wobei die beiden Schachtöffnungen 5a, 5b jedes Kartenlesers 1 jeweils an den Außenseiten der Anordnung vorgesehen sind.

## Patentansprüche

1. Kartenleser (1) für IC-Karten (2a, 2b), insbesondere für SIM-Karten, zur Befestigung auf einer Leiterplatte (10), umfassend mindestens zwei Kontaktiereinheiten (3a, 3b) mit jeweils einem Kartenschacht (4a, 4b), in dessen Schachtöffnung (5a, 5b) jeweils eine IC-Karte (2a, 2b) bis in ihre Kontaktierposition einschiebbar ist, wobei die beiden Kartenschächte (4a, 4b) parallel nebeneinander angeordnet sind,
dadurch gekennzeichnet,
die beiden Schachtöffnungen (5a, 5b) benachbarter Kartenschächte (4a, 4b) an unterschiedlichen Seiten des Kartenlesers (1) vorgesehen sind.

2. Kartenleser nach Anspruch 1, dadurch gekennzeichnet, dadurch gekennzeichnet, daß die beiden Kontaktiereinheiten (3a, 3b) identisch ausgebildet sind.

3. Kartenleser nach Anspruch 1 oder 2, dadurch gekennzeichnet, daß die beiden Schachtöffnungen (5a, 5b) auf einander gegenüberliegenden Seiten des Kartenlesers (1) vorgesehen sind.

4. Kartenleser nach Anspruch 1 oder 2, dadurch gekennzeichnet, daß die beiden Schachtöffnungen (5a, 5b) am Kartenleser (1) um 90° zueinander versetzt angeordnet sind.

5. Kartenleser nach Anspruch 1 oder 2, dadurch gekennzeichnet, daß bei einem n-seitigen Kartenleser die Schachtöffnungen der einzelnen Kontaktiereinheiten um jeweils 360°/n zueinander versetzt ringsum am Kartenleser angeordnet sind.

6. Anordnung (9) von vier vierseitigen Kartenlesern (1) nach Anspruch 4 auf einer Leiterplatte (10), dadurch gekennzeichnet, daß die vier Kartenleser (1) flach liegend auf der Leiterplatte (10) im Quadrat angeordnet sind und daß die beiden Schachtöffnungen (5a, 5b) jedes Kartenlesers (1) an den Außenseiten der Anordnung vorgesehen sind.

7. Anordnung von zwei vierseitigen Kartenlesern mit jeweils drei Kontaktiereinheiten nach Anspruch 1 auf einer Leiterplatte (10), dadurch gekennzeichnet, daß die zwei Kartenleser flach liegend auf der Leiterplatte (10) angeordnet sind und daß die drei Schachtöffnungen jedes Kartenlesers an den Außenseiten der Anordnung vorgesehen sind.
